# EUROPEAN PATENT SPECIFICATION

(11) **EP 1 931 147 B1**
(45) Date of publication and mention of the grant of the patent: **10.07.2019**
(21) Application number: 06025032.1
(22) Date of filing: 04.12.2006
(51) Int. Cl.: G06T 3/40, H04N 5/232, H04N 13/211

(54) **APPARATUS AND METHOD FOR PROCESSING AN IMAGE OF A SURROUNDING OF A VEHICLE**
VORRICHTUNG UND VERFAHREN ZUM VERARBEITEN EINES BILDES EINER UMGEBUNG EINES FAHRZEUGES
APPAREIL ET PROCÉDÉ POUR LE TRAITEMENT D'UNE IMAGE DES ABORDS D'UN VÉHICULE

(43) Date of publication of application: 11.06.2008
(73) Proprietor: Harman Becker Automotive Systems GmbH, 76307 Karlsbad (DE)
(72) Inventor: MOHR, Ulrich, 76131 Karlsruhe (DE); STEPHAN, Martin, 76337 Waldbronn (DE); STIEGLER, Andreas, 76337 Waldbronn (DE)
(74) Representative: Bertsch, Florian Oliver

(56) References cited:
- EP-A- 1 562 147
- EP-A- 1 637 837
- GB-A- 2 265 779
- US-A1- 2002 159 616
- US-A1- 2003 169 902

## Description

### Background of the invention

The present invention relates to an image processing system. In particular, the present invention relates to an apparatus and a method for processing and displaying an image of the surrounding of a vehicle to a driver.

Modern vehicles provide sophisticated functionalities to drivers of these vehicles. Recently systems are in discussion in which a driver is provided with an image of the surrounding of the vehicle on a small display in the cockpit of the vehicle. This is, for example, especially helpful in the case when the position of the driver in the vehicle does not allowed to visually gather all relevant information. Driving into a parking spot could be an example for such a situation in which positioning a camera at the backside of the vehicle and providing the image of the camera to a display in the cockpit could strongly assist the driver in quickly reaching the parking position. Another example could be capturing an image of a road before the vehicle in the case the sight is obscured by fog or supervising the rear part of the road for approaching vehicles. Before displaying such an image the picture data can then be processed in order to improve a recognition of objects in the fog. Displaying such picture at the display in the cockpit of the vehicle would then provide the advantage of earlier recognizing obstacles on the road such that, for example, an adaption of the speed of the vehicle can be performed in time. However, processing and/or displaying such a picture normally requires an analog-to-digital-conversion (or even a direct digital capture) of the image. Furthermore, a transfer and the display of such an image has a high latency since conventional systems work on a whole video image approach. This means that only complete video images are captured consecutively by a sensor and are processed or transfered as a complete image.

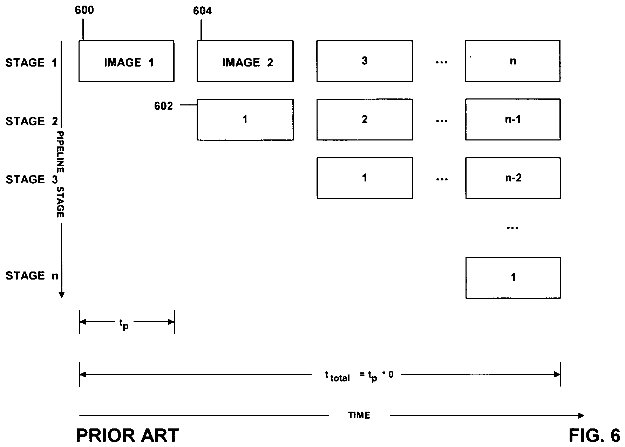

Such a conventional approach of processing whole images can be seen in Fig. 6. At the ordinate of Fig. 6 different pipeline stages [as a for example the image generation (stage 1), an image transfer (stage 2), image processing (stage 3), image display (stange n), etc.] are depicted. At the abscissa of Fig. 6 a time duration is depicted. As can be seen from Fig. 6 the first image (Image 1) is generated at stage 1 which can be concluded from the Image 1 being located at a first position 600. However, generating Image 1 in the first position 600 takes a time tₚ which can be concluded from the abscissa of Fig. 6. Subsequently Image 1 is transfered to stage 2 which then processes Image 1 at a later time instant (see position 602 in Fig. 6). Stage 1 generates a new image, now denoted as Image 2 (see position 604 in Fig. 6). When stage 2 has completed processing Image 1, Image 1 is transfered to stage 3 and Image 2 his transfered from stage 1 to stage 2. Furthermore, a new image, namely Image 3, is generated in stage 1. In the case the processing (respectively generating) of an image comprises several stages it is clear that the latency in which the image is processed completely can be calculated by the formula tₜₒₜₐₗ=tₚ^{∗}n. This total latency tₜₒₜₐₗ is depicted on the abscissa of Fig. 6.

More precisely, given a capture frequency f, it takes a time of 1/f to get a complete image. Even in the case the steps of processing or displaying can be performed much faster it is not possible to increase the image rate as the sensor only provides images in an image rate of 1/f. Typical image rates of conventional sensors (i.e. cameras) provide images with an image rate f= 25/s, which results in an image latency of 40 ms. When latency for displaying or processing is also considered the latency of conventional systems easily rises above 80 ms. In contrast hereto it has to be mentioned that the human visual system has a much lower latency such that displaying an image on a display in the cockpit with a latency above 80 ms will result in an irritation of the driver of the vehicle. This, in turn, reduces the safety of the vehicle as the driver's attention is drawn off the traffic situation.

EP 1 562 147 A1 discloses a driver assist system comprising a mobile body surrounding surveillance apparatus where an image capturing section detects approaching vehicles by image processing, wherein a movement to the left or a movement to the right of the vehicle detected in a particular region forms the basis for the decision whether the vehicle behind is approaching the own vehicle. A complete image is captured and then a particular region is selected for further processing.

Therefore, there exists a need in the art for providing an improved way for processing an image in a vehicle, in particular, and improved apparatus and method for processing an image of the surrounding of a vehicle.

### Summary of the invention

According to the present invention, this need is addressed by an apparatus according to claim 1 and a method according to claim 24. The independent claims define preferred or advantageous embodiments of the invention.

According to one aspect of the present invention the apparatus for processing an image of a surrounding of a vehicle comprises the following features:
- an image generator being a camera and configured for generating an image, the image having at least a first and a second portion each with a contiguous array of pixels, the first and second portions being different from each other and the first portion of the image being provided for further processing earlier than the second portion of the image, wherein the image generator is configured to transfer, to an image processor, the first portion while generating the second portion; and
- the image processor being configured for processing the first and second portions of the image in order to process the image, wherein the image processor is furthermore configured for processing said first portion of said image while said second portion of said image is not yet available to the image processor.

Note in this context that the the image generator can be a camera or the like and the image processor can comprise, for example, a microcontroller and/or a display unit. Therefore the term "image processor" is not only limited to microcomputers or microcontrollers but also includes all kinds of displays as displaying is also a form of a processing received data.

The present invention is based on finding that the latency from generating and processing an image can be significantly reduced when not a complete image is firstly generated (respectively captured) and afterwards the data of this complete image is processed but rather than a generation of the image is divided such that only parts of the image are generated and are then transferred to the image processor. The image processor is then able to process the firstly received part (portion) of the image while the image generator is still working in taking a further, different part of the image. Subsequently, the image generator transfers the further, different part of the image to the image processor which then may probably has already completed the processing of the first part of the image and has transferred, for example, the processed version of the first part of the image to a further processing stage. Thus, it is possible to process the image by parts and not as a complete image such that (assuming the processing time for each part of the image being lower than a generation for said part of the image) a significant decrease of latency can be realized. This reduction in latency is the larger the more processing stages are used. A more detailed explanation is given further below.

In a specific embodiment of the present invention the image processor is configured for displaying the first and second portions and the image processor being further configured for displaying the first portion of the image while the second portion of the image is not yet provided to the image processor by the image generator. Such an implementation of the image processor has the advantage that the driver of the vehicle can recognize the image on the display timely such a that a high degree of irritation resulting from a high latency time between capturing and displaying the image can be avoided. Additionally, the driver's human visual system can adequately be addressed as the human recognition system is not able to anticipate the displayed information at once but rather select relevant information step by step from the displayed image. Therefore it is not necessary to display the image as a whole; the display of portions of the image time-after-time is completely sufficient.

According to another embodiment of the present invention the image generator is configured for generating a horizontal slice of the image as the first or second portion of the image. As the human eye is used to capture information in horizontal lines generating a horizontal portion of the image this will enable the driver to get the relevant information from the display quickly. Additionally, conventional cameras capture images row-wise, such that a horizontal slicing of the image can be easily realized by low-cost image capture systems as no difficult shaping of the portions of the image is needed in the image generator.

Furthermore, the image generator can be configured for providing slices of the image as first and second portions of the image, wherein the first portion of the image represents an area of the image being located in the image above an area represented by the second portion of the image. Such a top-down approach in generating the image from different subsequent portions provides the advantage that a processing (especially a displaying) of the different portions of the image can be performed in a continuous way without forcing the eyes of the driver to jump between different image areas on the display. Therefore such a top-down approach helps not to attract too much attention of the driver on the display but rather give him enough time to observe the traffic situation carefully.

The first and second portions can also represent adjacent areas of the image in a further embodiment of the present invention. In such a situation the process of capturing respectively generating the individual portions of the image can be simplified as normally the image generator provides the data of the portions line-by-line such a that only the data of a first group of lines is provided as the first portion of the image wherein the immediately following lines are grouped together as the second portion. Additionally, the image processing can be simplified as for example in the case of an object extending from the first portion into the second portion of the image the detection of a this object can be performed much faster as if a third offset portion is provided to the image processor which does not represent an area of the image being located adjacent to the area covered by the first portion.

In another embodiment of the present invention the first and second portions cover a common area of the image. This provides the advantage that the image processor can more easily detect objects which cross the border of the first and second portion. This is due to the fact that the object can be identified by an identical pattern in the overlapping region of the first and second portions as well as the respective patterns in the first and second portions which directly connect to the identical patterns in the overlapping region. Therefore the image processor can clearly distinguish between, on the one hand, objects which do not extend into an adjacent portion and, on the other hand, objects which extend across the border between the first and second portion.

However, in an alternative embodiment of the present invention the first and second portions do not comprise any common area of the image. Such a configuration of the present invention provides the advantage that the image processor does not need to process image data twice which, consequently, results in reduced processing time.

It is furthermore of advantage when the first and second portions of the image have a substantially equal size. In such a case the image processor can be optimized for the processing of equally sized data packages, similar to using an FFT instead of a discreet Fourier transform, which again results in a reduced processing time due to the usage of specially adapted algorithms.

According to a further embodiment of the present invention, the image generator can be configured for generating n portions of the image being different from each other, n being a natural number and the n portions of the image being generated consecutively after each other and wherein the image processor is configured for processing the n-th portion of the image after processing the (n-1)-th portion of the image. Such a configuration provides the advantage that the image generator can split-off the image into subsequent portions such that a fast processing of the complete image can be performed portion-wise. In contrast to only processing the first and second portion spliting-off the complete image in a plurality of portions additionally increases processing speed as the time needed for processing the complete image is proportional to the number of portions of the image is split into.

However, it is advantagous if the image generator is configured for generating for said image not more that eight portions. This is based on the fact that if the image generator splits-off the image into more than eight portions the signaling overhead for identifying each of these portions increases. An increase in signaling overhead, in turn, requires transferring a larger amount of data as well as an increased effort for unpacking the image data from a frame structure which results in a higher processing time respectively higher latency.

According to another embodiment of the present invention the image processor is configured to extract object information from objects comprised in the first or second portion of the image. Such an embodiment of the present invention advantageously combines different functions of the image processing as for example just displaying quickly the captured image portion-wise and also some safety-relevant functionality as, for example, identifying obstacles before the car, when the car is in motion. Thus, a such configured embodiment of the present invention has an additional advantage as not only the surrounding of a vehicle is quickly displayed to the driver but to also a timely information about a possibly dangerous traffic situation can be provided to said driver.

Additionally, in an embodiment of the present invention the image processor can also be configured for using the extracted object information in order to add further objects to the first or second portions of the image.This provides the advantage that the driver's attention can be directed to the detected object, especially when the shapes of a the added objects clearly distinguish from normal shapes which can be expected in the surrounding of a vehicle.

More precisely, the image processor can be configured for adding circles, triangles or rectangles as further objects around objects detected in the first or second portion of the image. By choosing rectangles, circles or triangles as added objects around the detected objects, the driver's attention can be especially drawn on these detected objects. This is due to the fact that such geometrical shapes are firstly very unusual in a normal image of a surrounding of a vehicle and secondly these geometrical shapes are quite similar to traffic signs to which a driver normally pays enough attention.

In a further embodiment of the present invention, the image processor can be configured for adding the further objects in a different colour than the objects detected in the first or second portion of the image. This additionally increases the perceptability of the detected objects as the driver's attention is guided to the detected objects by the contrast in colour between the added objects and the detected objects.

Additionally, the image processor may be configured for extracting object information comprised in the first and second portions of the image, wherein the first and second portions are adjacent portions of the image. This provides the advantage that also larger objects which extend across two portions can easily be detected. Thus, the aspect of quickly generating (respectively processing) an image portion-wise can be combined with a high capability of recognizing also large objects, even if the image is split-off in a larger number of portions for the sake of an increase of processing speed.

According to a further embodiment of the present invention the image generator can be synchronized to the image processor in such a way that when the first portion of the image is generated by the image generator said first portion is processed by the image processor without delay. Such a configuration has the advantage that the latency for processing the image of the surrounding of the vehicle can be further decreased. This is due to the fact that, if for example the image generator provides a top slice of the image and the display of an image processor is still busy with displaying the lowest slice of the previous image the generated top slice of the image has to be stored in the meantime. Such a storage results in an additional latency which can be avoided if the image generator is synchronized to the image processor in such a way that, if for example of the top slice of an image is generated it is immediately processed (or displayed) by the image processor (respectively the display).

Furthermore, the image generator can also be further synchronized to the image processor in such a way that when the second portion of the image is generated by the image generator said second portion is processed by the image processor without delay. This synchronization makes sure that not only privileged portions are displayed immediately but also subsequent portions are analogously immediately displayed such a that a complete synchronization between the image generator and the image processor is guaranteed.

The image processor can furthermore be configured for processing the first portion of the image such that a processed version of the first portion of the image is provided after a latency time of 20 to 40 ms after the image generator has provided the first portion of the image. This guarantees a that the latency does not become too large to be recognized by the human eye which would, in turn, aquire to much attention of the driver to observe the image construction in the display and compare it with the real image.

Furthermore, the image generator may be a CMOS image sensor. Using such an image generator provides the advantage that very cheap and reliable sensors can be used which reduce the overall costs of this embodiment of the present invention.

Also, the image processor can comprise a LCD display for displaying the first and second portion of the image. This again provides the advantage that cheap and reliable components can be used in order to reduce the overall costs of a thus constructed system.

In a further embodiment the image generator can be configured for transforming the first and second portion of the image in a digital representation thereof and for transfering the digital representation of the first and second portion of the image to the image processor. This provides the advantage that the digital version of the portions of the image are transfered which are more robust against impairments during the transmission. Additionally, the analog-to-digital-conversion can already be performed in the image generator which, in turn, releases the burden of the image processor and thus enables the image processor to more quickly perform its own originary tasks.

Furthermore, the image generator can also be configured for transfering the digital representation of the first and second portion of the image via an optical serial bus of the vehicle to the image processor. Such a means for data transfer between the image generator and the image processor has the advantage that it is light-weight, cheap and has a height transmission capacity which is highly desirable for implementation in a mass product like a vehicle.

In a special embodiment of the present invention the image generator is a rear view camera for providing a rear view of the vehicle. Such a configuration of the image generator enables the driver to, for example, timely identify cars approaching with high-speed. Furthermore, such a rear view camera as an image generator can also assist the driver when he wants to park the vehicle in a narrow parking spot.

Besides the above mentioned apparatuses the present invention may comprise also a method for processing an image of a surrounding of a vehicle comprising the following steps:
- generating, by a camera, an image having at least a first and a second portion each with a contiguous array of pixels, the first and second portions being different from each other and the first portion of the image being provided earlier than the second portion of the image;
- transferring the first portion of the image to an image processor while generating of the second portion; and
- processing, by the image processor, the first and second portions of the image in order to process the image, wherein the image processor is furthermore configured for processing said first portion of said image while said second portion of said image is not yet available to the image processor.

The advantages to be realized by such a method are the same as the advantages which can be obtained by the respective apparatus.

The main field of application of the present invention will be the imaging of surroundings of a vehicle. However, it is obvious that the president invention can also be applied in different image processing areas of technology.

### Brief description of the drawings

Additional features and advantages of the present invention will become more readily appreciated from the following detailed description of preferred or advantagous embodiments with reference to the accompanying drawings.
Fig. 1 shows a schematic block diagram of an apparatus for processing an image of the surrounding of a vehicle according to an embodiment of the present invention.
Fig. 2 shows an example of an image generated by the image generator wherein the image comprises several portions.
Fig. 3 shows a schematic scheme how the different portions of an image are processed in different processing or generation stages according to an embodiment of the invention.
Fig. 4 shows a schematic diagram of an image generated by the image generator, the image having overlapping and non-overlapping portions and wherein an object detection can be performed based on the generated image portions.
Fig. 5 shows a flowchart representing a method for processing an image of the surrounding of a vehicle according to an embodiment of the invention.
Fig. 6 shows a schematic scheme how different images are processed at different processing or generation stages according to a conventional image processing approach.

### Detailed Description of embodiments

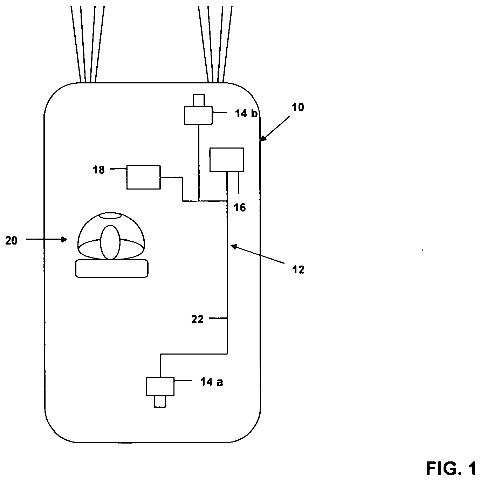

Fig. 1 discloses a schematic diagram, how an embodiment of the present invention can be implemented in a vehicle 10, for example a car. The apparatus 12 comprises at least one image generator 14a or 14b. The embodiment of the present invention as disclosed in Fig. 1 has two image generators 14, for example, a rear view camera 14a and a front view camera 14b. Nevertheless, it is also possible to use just one image generator, for example just the rear view camera 14a. Additionally, the apparatus 12 disclosed in Fig. 1 comprises an image processor 16 as well as a display 18 which is adapted to display the image to the driver 20 of the vehicle 10. The elements of the apparatus 12, namely the rear view camera of 14a, the front view camera 14b, the image processor 16 and the display 18 are connected to each other by a bus 22, which can be implemented, for example, as an optical fiber for transmitting serially coded data. Furthermore the driver 20 of the vehicle 10 may be able to turn a switch at the display in order to make sure that either the image generated by the rear view camera 14a or the image generated by the front view camera 14b is displayed at the display 18.

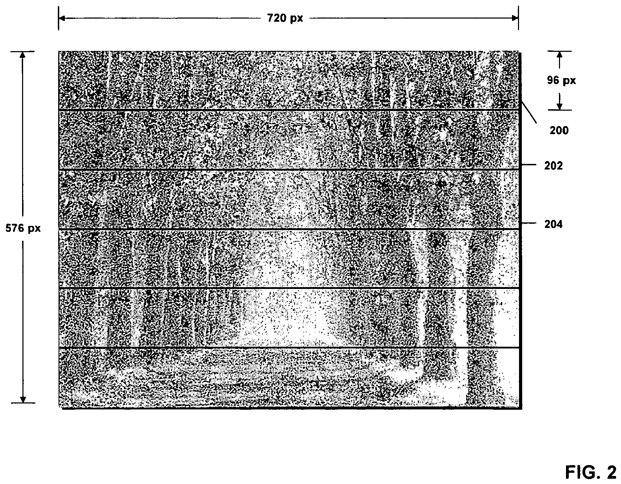

The functionality of the apparatus 12 can be described as follows. When the rear view camera 14a generates an image, this image is not transfered as a whole image via the bus 22 to the image processor 16. Rather, the generated image is separated into horizontal slices of this image. This approach needs a the functionality of an image sensor to capture the image not as a whole but segment-wise like, for example, row-wise. Fig. 2 discloses an example of such a picture of the rear view camera 14a. This image has a height of 576 pixels and a width of 720 pixels. When capturing this picture, the rear view camera 14a may already segment this picture into 6 slices, each having a height of 96 pixels. In this context it has to be mentioned that the horizontal slicing of the image is only for explanation purposes such that the present invention is not limited to a horizontal slicing of the image. After the data of the first (upper) image slice 200 is completely captured, the data of said first image slice 200 is send via the bus 22 to the image processor 16. The image processor 16 can then already start processing the first image slice 200 while the rear view camera 14a can already capture the data of the second slice 202 of the image. After the date of the second slice 202 of the image has completely been captured by the rear view camera 14a, the data of a said second slice 202 is then also transfered via the bus 22 to the image processor 16. The image processor 16 may then already have completed the processing of the first slice 200 of the image such that the first slice 200 of the image can already be sent to the display 18 via the bus 22. Subsequently, the image processor 16 can further process the data of the second slice 202 of the image while the rear view camera 14a captures the data of the third slice 204 of the image. Such a processing can be repeated until the image is completed, respectively all slices of the image, have been processed by the image processor 16.

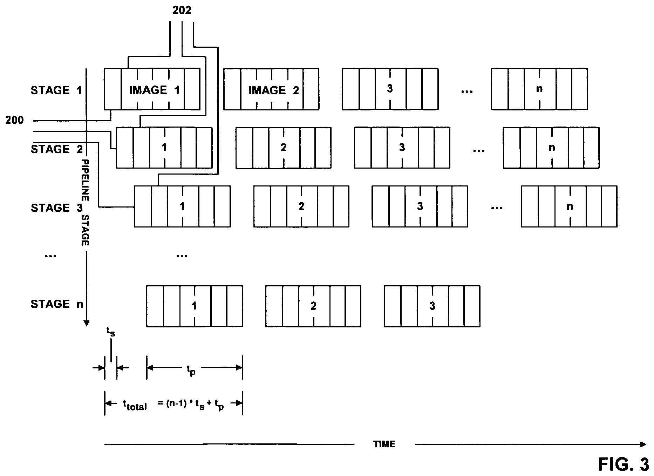

Fig. 3 shows the inventive approach in a diagram similar to the diagram of Fig. 6. In contrast to the diagram of Fig. 6 it can be clearly recognized from Fig. 3 that the total latency tₜₒₜₐₗ of the present invention is much lower than the total latency tₜₒₜₐₗ of conventional approaches. This is due to a much improved parallelized processing structure as the first slice 200 of Image 1 can already be processed in stage 2, while the second slice 202 of Image 1 is still generated in stage 1. Thus, the inventive approach works best when a high number of image slices is used. The total latency tₜₒₜₐₗ according to the inventive approach can be calculated according to the formula tₜₒₜₐₗ = (n-1)^{∗}tₛ+tₚ with tₛ being the time for capturing (respectively processing) an image slice and tₚ being a time for processing a whole image. On a minor note only, it has to be mentioned that the present considerations are based on the assumption that a time for capturing the image slice is nearly equal to the time of processing this image slice. However, this assumption is not a prerequisite for implementing the present invention and is only used for explanation purposes. Thus, it can be seen that the improvement of latency can be expressed by the factor (n-1) ^{∗}tₛ such that is desirable to have a high number of slices in an image. Nevertheless there should be no more than six to eight slices of an image as otherwise the signaling overhead for recognizing each of these slices would become very large which would, in turn, decrease the processing speed.

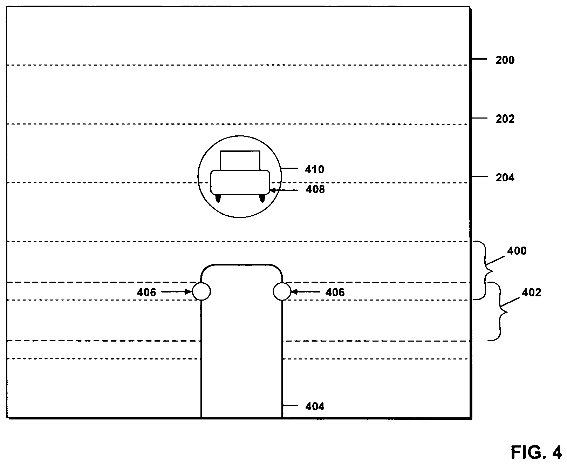

The segmentation into slices 200, 202 and 204 can be seen more clearly in Fig. 4. The slices can either be chosen such a that they do not cover common areas of the image, i.e. they have no overlapping sections like the slices 200, 202 and 204 or, such that they have overlapping sections like the slices 400 and 402. The choice of non-overlapping slices has the advantage that the picture can be captured or processed faster as no data is processed twice. On the other hand it is much easier for processor to process image data, for example extract object information from the image data of the slices, when the processor can use the silhouette of the objects at a border region of the slice to adjust the slices to each other for the detection. In this way the image processor can much easier detect large objects which extend across more than one slice. For demonstration purposes an object as for example a pole 404 is shown in Fig. 4. In the case the slices of the image overlap there exist image areas 406 which can be used to adjust the position of a the slices such a that the pole 404 can be actually detected in whole and not only be interpreted as object within one slice. Moreover it is not necessary that the the image is uniquely segmented either in non-overlapping slices or in overlapping slices. Rather the present invention may also be implemented according to a further embodiment in which overlapping and non-overlapping slices are used. Especially in a middle section of the image it may be helpful to use overlapping slices as the middle section is normally the most important section of a picture such a that a high degree of detection accuracy should be provided for this section which can be realized with overlapping slices. As other sections of an image normally not comprise as much relevant information as the middle section of the image it is normally not necessary to implement for these sections a structure using overlapping slices which would require a higher data processing effort as if non-overlapping slices were used.

Additionally, more complex objects can also be detected across slice the borders (like the car 408) even in the case the slices do not overlap. However, it is more complicated to detect such objects as the image processor does not get any information whether the object ends at a slice border and a new, different object is positioned at the opposite slice such that the slice border is not only a virtuel imaginary border but also a physical border of two separate objects. An object detection can then be only performed if the silhouette of the complete object via two or more slices can be recognized, for example by a matching of the detected silhouette with a known silhouette stored in the memory. As an additional feature of the embodiment of the present invention it is shown in Fig. 4 that the image processor 16 can draw into the slices additional objects 410 like rectangles, circles or triangles around detected objects which are recognized to be of importance for the safety of the vehicle. The additional objects can for example be drawn in different colors as to attract the attention of the driver of the vehicle. In the embodiment shown in Fig. 4 a car 408 being in front of the vehicle 10 is detected such that, for example, the distance to said car 408 can be computed by the image processor as an other feature. For such a processing it might be helpful to detect the type of the car 408 from the silhouette and provide information about the actual dimensions of the detected car 408 from said memory. Subsequently the distance between the vehicle 10 and car 408 in front of the vehicle can be computed on the basis of a the dimensions of the recognized type of car. This provides the additional advantage that a thus configured embodiment of the present invention can also be used for example as a distance warner when the vehicle 10 is in motion. Also, in this scenario a central aspect of the present invention can again be recognized in the fact that the present invention has a very low latency such a that a warning can be provided to the driver early enough before a possibly dangerous situation arises.

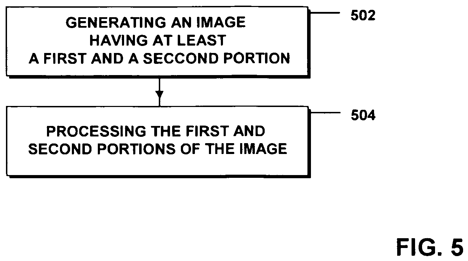

Fig. 5 shows a flow diagram of an embodiment of the present invention when being implemented as a method. Such a method comprises as a first step 502 step of generating an image which has at least a first and a second portion. These portions a can be, for example, the non-overlapping slices 200, 202, 204 or the overlapping slices 400 or 402. In a subsequent method step 504 a processing of the first and second portions of the image is performed such that the image can be displayed with a low latency or objects can be detected from the image and data of the different slices. The step of generating 502 or the step of processing 504 can be implemented as mentioned above in order to achieve the previously described advantages..

Summarizing the present invention it has to mentioned that even if the individual processing step works significantly faster than in real-time (the processing takes << 1/f), there is no way to decrease the latency to less than 1/f when using a complete picture approach. The invention describes, according to an embodiment thereof, how the processing of latency can be reduced by working on n sup-images (portions) so that it is only limited by the speed of the actual processing and not by the time needed until a whole image is available. If the image is split into n sub-images, this results in a latency reduction up to factor n. As an aspect of the present invention, the complete video processing pipeline is not working on a complete picture, but on a subset of the image, e.g. the image is divided into a set of scatters containing for example several lines of the image only. The division of the image depends on the capturing system: the image should be divided in such a way that the scatter is available earlier than the whole picture. In the example mentioned above, the capture system would capture the video image from the top to the bottom, therefore, the first lines of the image are available significantly earlier than the lower lines.

As soon as the first scatter is available, the processing can be started without the need to wait for the rest of the image. This enables the second stage of the video pipeline to start even though the first stage (e.g. capture process) is not yet complete.

## Claims

1. Apparatus (12) for processing an image of a surrounding of a vehicle (10) comprising the following features:
- an image generator (14a, 14b) being a camera and configured for generating an image, the image having at least a first (200) and a second (202) portion each with a contiguous array of pixels, the first (200) and second (202) portions being different from each other and the first (200) portion of the image being generated for further processing earlier than the second (202) portion of the image, wherein the image generator is configured to transfer, to an image processor (16), the first portion while generating the second portion; and
- the image processor (16) being configured for processing the first (200) and second (202) portions of the image in order to process the image, wherein the image processor (16) is furthermore configured for processing said first (200) portion of said image while said second (202) portion of said image is not yet available to the image processor (16).

2. Apparatus (12) according to claim 1, **characterized in that** the image processor (16) is configured for displaying the first (200) and second (202) portions and wherein the image processor (16) is further configured for displaying the first (200) portion of the image while the second (202) portion of the image is not yet provided to the image processor (16) by the image generator (14a, 14b).

3. Apparatus (12) according to one of claims 1 or 2, **characterized in that** the image generator (14a, 14b) is configured for generating a horizontal slice of the image as the first (200) or second (202) portion of the image.

4. Apparatus (12) according to claim 3, **characterized in that** the image generator (14a, 14b) generates slices of the image as first (200) and second (202) portions of the image, wherein the first (200) portion of the image represents an area of the image being located in the image above an area represented by the second (202) portion of the image.

5. Apparatus (12) according to claim 4, **characterized in that** the first (200) and second (202) portions represent adjacent areas of the image.

6. Apparatus (12) according to claim 4, **characterized in that** the first (400) and second (402) portions cover a common area of the image.

7. Apparatus (12) according to claim 4 or 5, **characterized in that** the first (200) and second (202) portions do not comprise any common area of the image.

8. Apparatus (12) according to one of the preceding claims, **characterized in that** the first (200) and second (202) portions of the image have a substantially equal size.

9. Apparatus (12) according to one of the preceding claims, **characterized in that** the image generator (14a, 14b) is configured for generating n portions of the image being different from each other, n being a natural number and the n portions of the image being generated consecutively after each other and wherein the image processor (16) is configured for processing the n -th portion of the image after processing the (n-1)-th portion of the image.

10. Apparatus (12) according to one of the preceding claims, **characterized in that** the image generator (14a, 14b) is configured for generating for said image not more than eight portions.

11. Apparatus (12) according to one of the preceding claims, **characterized in that** the image processor (16) is configured to extract object information from objects comprised in the first (200) or second (202) portion of the image.

12. Apparatus (12) according to claim 11, **characterized in that** the image processor (16) is configured for using the extracted object information in order to add further objects to the first (200) or second (202) portions of the image.

13. Apparatus (12) according to claim 12, **characterized in that** the image processor (16) is configured for adding circles, triangles or rectangles as further objects around objects detected in the first (200) or second (202) portion of the image.

14. Apparatus (12) according to one of claims 12 or 13, **characterized in that** the image processor (16) is configured for adding the further objects in a different colour than the objects detected in the first (200) or second (202) portion of the image.

15. Apparatus (12) according to one of claims 11 to 14, **characterized in that** the image processor (16) is configured for extracting object information comprised in the first (200) and second (202) portions of the image, wherein the first (200) and second (202) portions are adjacent portions of the image.

16. Apparatus (12) according to one of the preceding claims, **characterized in that** the image generator (14a, 14b) is synchronized to the image processor (16) in such a way that when the first (200) portion of the image is generated by the image generator (14a, 14b) said first (200) portion is processed by the image processor (16) without delay.

17. Apparatus (12) according to claim 16, **characterized in that** the image generator (14a, 14b) is further synchronized to the image processor (16) in such a way that when the second (202) portion of the image is provided by the image generator (14a, 14b) said second (202) portion is processed by the image processor (16) without delay.

18. Apparatus (12) according claim 15 or 17, **characterized in that** the image processor (16) is configured for processing the first (200) portion of the image such that a processed version of the first (200) portion of the image is provided after a latency time of 20 to 40 ms after the image generator (14a, 14b) has provided the first (200) portion of the image.

19. Apparatus (12) according to one of the preceding claims, **characterized in that** the image generator (14a, 14b) is a CMOS image sensor.

20. Apparatus (12) according to one of the preceding claims, **characterized in that** the image processor (16) comprising a LCD display for displaying the first (200) and second (202) portion of the image.

21. Apparatus (12) according to one of the preceding claims, **characterized in that** the image generator (14a, 14b) is configured for transforming the first (200) and second (202) portion of the image in a digital representation thereof and for transferring the digital representation of the first (200) and second (202) portion of the image to the image processor (16) .

22. Apparatus (12) according to claim 20, **characterized in that** the image generator (14a, 14b) is configured for transferring the digital representation of the first (200) and second (202) portion of the image via an optical serial bus of the vehicle (10) to the image processor (16).

23. Apparatus (12) according to one of the preceding claims, **characterized in that** the image generator (14a) is a rear view camera for providing a rear view of the vehicle (10) .

24. Method for processing an image of a surrounding of a vehicle (10) comprising the following steps:
- generating (502), by a camera, an image having at least a first (200) and a second (202) portion each with a contiguous array of pixels, the first (200) and second (202) portions being different from each other and the first (200) portion of the image being provided earlier than the second (202) portion of the image;
- transferring the first portion of the image to an image processor while generating of the second portion; and
- processing (504), by the image processor, the first (200) and second (202) portions of the image in order to process the image, wherein the image processor is furthermore configured for processing said first (200) portion of said image while said second (202) portion of said image is not yet available to the image processor.

## Patentansprüche

1. Vorrichtung (12) zum Verarbeiten eines Bildes einer Umgebung eines Fahrzeuges (10), umfassend die folgenden Merkmale:
- einen Bilderzeuger (14a, 14b), der eine Kamera ist und zum Erzeugen eines Bildes konfiguriert ist, wobei das Bild mindestens einen ersten (200) und einen zweiten (202) Abschnitt jeweils mit einer zusammenhängenden Matrix aus Pixeln aufweist, wobei sich der erste (200) und zweite (202) Abschnitt voneinander unterscheiden und der erste (200) Abschnitt des Bildes zur Weiterverarbeitung früher als der zweite (202) Abschnitt des Bildes erzeugt ist, wobei der Bilderzeuger zum Übertragen des ersten Abschnittes an einen Bildprozessor (16) konfiguriert ist, während der zweite Abschnitt erzeugt wird; und
- wobei der Bildprozessor (16) zum Verarbeiten des ersten (200) und zweiten (202) Abschnittes des Bildes konfiguriert ist, um das Bild zu verarbeiten, wobei der Bildprozessor (16) des Weiteren zum Verarbeiten des ersten (200) Abschnittes des Bildes konfiguriert ist, während der zweite (202) Abschnitt des Bildes dem Bildprozessor (16) noch nicht zur Verfügung steht.

2. Vorrichtung (12) nach Anspruch 1, **dadurch gekennzeichnet, dass** der Bildprozessor (16) zum Anzeigen des ersten (200) und zweiten (202) Abschnittes konfiguriert ist, und wobei der Bildprozessor (16) ferner zum Anzeigen des ersten (200) Abschnittes des Bildes konfiguriert ist, während der zweite (202) Abschnitt des Bildes dem Bildprozessor (16) noch nicht durch den Bilderzeuger (14a, 14b) bereitgestellt ist.

3. Vorrichtung (12) nach einem von Anspruch 1 oder 2, **dadurch gekennzeichnet, dass** der Bilderzeuger (14a, 14b) zum Erzeugen einer horizontalen Schicht des Bildes als der erste (200) oder zweite (202) Abschnitt des Bildes konfiguriert ist.

4. Vorrichtung (12) nach Anspruch 3, **dadurch gekennzeichnet, dass** der Bilderzeuger (14a, 14b) Schichten des Bildes als erster (200) und zweiter (202) Abschnitt des Bildes erzeugt, wobei der erste (200) Abschnitt des Bildes einen Bereich des Bildes darstellt, der in dem Bild über einem Bereich angeordnet ist, der durch den zweiten (202) Abschnitt des Bildes dargestellt ist.

5. Vorrichtung (12) nach Anspruch 4, **dadurch gekennzeichnet, dass** der erste (200) und zweite (202) Abschnitt benachbarte Bereiche des Bildes darstellen.

6. Vorrichtung (12) nach Anspruch 4, **dadurch gekennzeichnet, dass** der erste (400) und zweite (402) Abschnitt einen gemeinsamen Bereich des Bildes abdecken.

7. Vorrichtung (12) nach Anspruch 4 oder 5, **dadurch gekennzeichnet, dass** der erste (200) und zweite (202) Abschnitt keinen gemeinsamen Bereich des Bildes umfassen.

8. Vorrichtung (12) nach einem der vorhergehenden Ansprüche, **dadurch gekennzeichnet, dass** der erste (200) und zweite (202) Abschnitt des Bildes eine im Wesentlichen gleiche Größe aufweisen.

9. Vorrichtung (12) nach einem der vorhergehenden Ansprüche, **dadurch gekennzeichnet, dass** der Bilderzeuger (14a, 14b) zum Erzeugen von n Abschnitten des Bildes konfiguriert ist, die sich voneinander unterscheiden, wobei n eine natürliche Zahl ist und die n Abschnitte des Bildes aufeinanderfolgend nacheinander erzeugt werden und wobei der Bildprozessor (16) zum Verarbeiten des n-ten Abschnittes des Bildes nach dem Verarbeiten des (n-1)-ten Abschnittes des Bildes konfiguriert ist.

10. Vorrichtung (12) nach einem der vorhergehenden Ansprüche, **dadurch gekennzeichnet, dass** der Bilderzeuger (14a, 14b) zum Erzeugen von nicht mehr als acht Abschnitten für das Bild konfiguriert ist.

11. Vorrichtung (12) nach einem der vorhergehenden Ansprüche, **dadurch gekennzeichnet, dass** der Bildprozessor (16) dazu konfiguriert ist, Objektinformationen aus Objekten zu extrahieren, die in dem ersten (200) oder zweiten (202) Abschnitt des Bildes enthalten sind.

12. Vorrichtung (12) nach Anspruch 11, **dadurch gekennzeichnet, dass** der Bildprozessor (16) zum Verwenden der extrahierten Objektinformationen konfiguriert ist, um weitere Objekte zu dem ersten (200) oder zweiten (202) Abschnitt des Bildes hinzuzufügen.

13. Vorrichtung (12) nach Anspruch 12, **dadurch gekennzeichnet, dass** der Bildprozessor (16) zum Hinzufügen von Kreisen, Dreiecken oder Rechtecken als weitere Objekte um die in dem ersten (200) oder zweiten (202) Abschnitt des Bildes detektierten Objekte herum konfiguriert ist.

14. Vorrichtung (12) nach einem von Anspruch 12 oder 13, **dadurch gekennzeichnet, dass** der Bildprozessor (16) zum Hinzufügen der weiteren Objekte in einer anderen Farbe als die in dem ersten (200) oder zweiten (202) Abschnitt des Bildes detektierten Objekte konfiguriert ist.

15. Vorrichtung (12) nach einem der Ansprüche 11 bis 14, **dadurch gekennzeichnet, dass** der Bildprozessor (16) zum Extrahieren von Objektinformationen konfiguriert ist, die in dem ersten (200) und zweiten (202) Abschnitt des Bildes enthalten sind, wobei der erste (200) und zweite (202) Abschnitt benachbarte Abschnitte des Bildes sind.

16. Vorrichtung (12) nach einem der vorhergehenden Ansprüche, **dadurch gekennzeichnet, dass** der Bilderzeuger (14a, 14b) derart mit dem Bildprozessor (16) synchronisiert ist, dass dann, wenn der erste (200) Abschnitt des Bildes durch den Bilderzeuger (14a, 14b) erzeugt wird, der erste (200) Abschnitt ohne Verzögerung durch den Bildprozessor (16) verarbeitet wird.

17. Vorrichtung (12) nach Anspruch 16, **dadurch gekennzeichnet, dass** der Bilderzeuger (14a, 14b) ferner derart mit dem Bildprozessor (16) synchronisiert ist, dass dann, wenn der zweite (202) Abschnitt des Bildes durch den Bilderzeuger (14a, 14b) bereitgestellt wird, der zweite (202) Abschnitt ohne Verzögerung durch den Bildprozessor (16) verarbeitet wird.

18. Vorrichtung (12) nach Anspruch 15 oder 17, **dadurch gekennzeichnet, dass** der Bildprozessor (16) zum Verarbeiten des ersten (200) Abschnittes des Bildes konfiguriert ist, sodass eine verarbeitete Version des ersten (200) Abschnittes des Bildes nach einer Latenzzeit von 20 bis 40 ms bereitgestellt wird, nachdem der Bilderzeuger (14a, 14b) den ersten (200) Abschnitt des Bildes bereitgestellt hat.

19. Vorrichtung (12) nach einem der vorhergehenden Ansprüche, **dadurch gekennzeichnet, dass** der Bilderzeuger (14a, 14b) ein CMOS-Bildsensor ist.

20. Vorrichtung (12) nach einem der vorhergehenden Ansprüche, **dadurch gekennzeichnet, dass** der Bildprozessor (16) eine LCD-Anzeige zum Anzeigen des ersten (200) und zweiten (202) Abschnittes des Bildes umfasst.

21. Vorrichtung (12) nach einem der vorhergehenden Ansprüche, **dadurch gekennzeichnet, dass** der Bilderzeuger (14a, 14b) zum Umwandeln des ersten (200) und zweiten (202) Abschnittes des Bildes in eine digitale Darstellung davon und zum Übertragen der digitalen Darstellung des ersten (200) und zweiten (202) Abschnittes des Bildes an den Bildprozessor (16) konfiguriert ist.

22. Vorrichtung (12) nach Anspruch 20, **dadurch gekennzeichnet, dass** der Bilderzeuger (14a, 14b) zum Übertragen der digitalen Darstellung des ersten (200) und zweiten (202) Abschnittes des Bildes über einen optischen seriellen Bus des Fahrzeuges (10) des Bildprozessors (16) konfiguriert ist.

23. Vorrichtung (12) nach einem der vorhergehenden Ansprüche, **dadurch gekennzeichnet, dass** der Bilderzeuger (14a) eine Rückfahrkamera zum Bereitstellen einer Rückansicht des Fahrzeuges (10) ist.

24. Verfahren zum Verarbeiten eines Bildes einer Umgebung eines Fahrzeuges (10), umfassend die folgenden Schritte:
- Erzeugen (502), durch eine Kamera, eines Bildes, das mindestens einen ersten (200) und einen zweiten (202) Abschnitt jeweils mit einer zusammenhängenden Matrix aus Pixeln aufweist, wobei sich der erste (200) und zweite (202) Abschnitt voneinander unterscheiden und der erste (200) Abschnitt des Bildes früher als der zweite (202) Abschnitt des Bildes bereitgestellt wird;
- Übertragen des ersten Abschnittes des Bildes an einen Bildprozessor während des Erzeugens des zweiten Abschnittes; und
- Verarbeiten (504), durch den Bildprozessor, des ersten (200) und zweiten (202) Abschnittes des Bildes, um das Bild zu verarbeiten, wobei der Bildprozessor des Weiteren zum Verarbeiten des ersten (200) Abschnittes des Bildes konfiguriert ist, während der zweite (202) Abschnitt des Bildes dem Bildprozessor noch nicht zur Verfügung steht.

## Revendications

1. Appareil (12) pour le traitement d'une image des abords d'un véhicule (10) comprenant les éléments suivants :
- un générateur d'image (14a, 14b) qui est une caméra et configuré pour générer une image, l'image ayant au moins une première (200) et une deuxième (202) portion chacune avec un réseau contigu de pixels, les première (200) et deuxième (202) portions étant différentes l'une de l'autre et la première (200) portion de l'image étant générée pour un autre traitement avant la deuxième (202) portion de l'image, dans lequel le générateur d'image est configuré pour transférer, à un processeur d'image (16), la première portion tout en générant la deuxième portion ; et
- le processeur d'image (16) étant configuré pour traiter les première (200) et deuxième (202) portions de l'image de manière à traiter l'image, dans lequel le processeur d'image (16) est configuré en outre pour traiter ladite première (200) portion de ladite image alors que ladite deuxième (202) portion de ladite image n'est pas encore disponible pour le processeur d'image (16) .

2. Appareil (12) selon la revendication 1, **caractérisé en ce que** le processeur d'image (16) est configuré pour afficher les première (200) et deuxième (202) portions et dans lequel le processeur d'image (16) est configuré en outre pour afficher la première (200) portion de l'image alors que la deuxième (202) portion de l'image n'est pas encore fournie au processeur d'image (16) par le générateur d'image (14a, 14b).

3. Appareil (12) selon une des revendications 1 ou 2, **caractérisé en ce que** le générateur d'image (14a, 14b) est configuré pour générer une tranche horizontale de l'image comme la première (200) ou la deuxième (202) portion de l'image.

4. Appareil (12) selon la revendication 3, **caractérisé en ce que** le générateur d'image (14a, 14b) génère des tranches de l'image comme des première (200) et deuxième (202) portions de l'image, dans lequel la première portion (200) de l'image représente une zone de l'image qui est située dans l'image au-dessus d'une zone représentée par la deuxième (202) portion de l'image.

5. Appareil (12) selon la revendication 4, **caractérisé en ce que** les première (200) et deuxième (202) portions représentent des zones adjacentes de l'image.

6. Appareil (12) selon la revendication 4, **caractérisé en ce que** les première (400) et deuxième (402) portions couvrent une zone commune de l'image.

7. Appareil (12) selon la revendication 4 ou 5, **caractérisé en ce que** les première (200) et deuxième (202) portions ne comprennent aucune zone commune de l'image.

8. Appareil (12) selon une des revendications précédentes, **caractérisé en ce que** les première (200) et deuxième (202) portions de l'image ont une taille sensiblement égale.

9. Appareil (12) selon une des revendications précédentes, **caractérisé en ce que** le générateur d'image (14a, 14b) est configuré pour générer n portions de l'image qui sont différentes l'une de l'autre, n étant un nombre naturel et les n portions de l'image étant générées consécutivement l'une après l'autre et dans lequel le processeur d'image (16) est configuré pour traiter la n-ième portion de l'image après le traitement de la (n-1)-ième portion de l'image.

10. Appareil (12) selon une des revendications précédentes, **caractérisé en ce que** le générateur d'image (14a, 14b) est configuré pour générer pour ladite image pas plus de huit portions.

11. Appareil (12) selon une des revendications précédentes, **caractérisé en ce que** le processeur d'image (16) est configuré pour extraire des informations d'objet à partir d'objets compris dans la première (200) ou la deuxième (202) portion de l'image.

12. Appareil (12) selon la revendication 11, **caractérisé en ce que** le processeur d'image (16) est configuré pour utiliser les informations d'objet extraites de manière à ajouter d'autres objets aux première (200) ou deuxième (202) portions de l'image.

13. Appareil (12) selon la revendication 12, **caractérisé en ce que** le processeur d'image (16) est configuré pour ajouter des cercles, des triangles ou des rectangles comme d'autres objets autour d'objets détectés dans la première (200) ou la deuxième (202) portion de l'image.

14. Appareil (12) selon une des revendications 12 ou 13, **caractérisé en ce que** le processeur d'image (16) est configuré pour ajouter les autres objets avec une couleur différente des objets détectés dans la première (200) ou la deuxième (202) portion de l'image.

15. Appareil (12) selon une des revendications 11 à 14, **caractérisé en ce que** le processeur d'image (16) est configuré pour extraire des informations d'objet comprises dans les première (200) et deuxième (202) portions de l'image, dans lequel les première (200) et deuxième (202) portions sont des portions adjacentes de l'image.

16. Appareil (12) selon une des revendications précédentes, **caractérisé en ce que** le générateur d'image (14a, 14b) est synchronisé avec le processeur d'image (16) de telle manière que, quand la première (200) portion de l'image est générée par le générateur d'image (14a, 14b), ladite première (200) portion soit traitée par le processeur d'image (16) sans retard.

17. Appareil (12) selon la revendication 16, **caractérisé en ce que** le générateur d'image (14a, 14b) est synchronisé en outre avec le processeur d'image (16) de telle manière que, quand la deuxième (202) portion de l'image est fournie par le générateur d'image (14a, 14b), ladite deuxième (202) portion soit traitée par le processeur d'image (16) sans retard.

18. Appareil (12) selon la revendication 15 ou 17, **caractérisé en ce que** le processeur d'image (16) est configuré pour traiter la première (200) portion de l'image de telle manière qu'une version traitée de la première (200) portion de l'image soit fournie après un temps de latence de 20 à 40 ms après que le générateur d'image (14a, 14b) a fourni la première (200) portion de l'image.

19. Appareil (12) selon une des revendications précédentes, **caractérisé en ce que** le générateur d'image (14a, 14b) est un capteur d'image CMOS.

20. Appareil (12) selon une des revendications précédentes, **caractérisé en ce que** le processeur d'image (16) comprend un dispositif d'affichage LCD pour afficher la première (200) et la deuxième (202) portion de l'image.

21. Appareil (12) selon une des revendications précédentes, **caractérisé en ce que** le générateur d'image (14a, 14b) est configuré pour transformer la première (200) et la deuxième (202) portion de l'image en une représentation numérique de celle-ci et pour transférer la représentation numérique de la première (200) et la deuxième (202) portion de l'image au processeur d'image (16).

22. Appareil (12) selon la revendication 20, **caractérisé en ce que** le générateur d'image (14a, 14b) est configuré pour transférer la représentation numérique de la première (200) et la deuxième (202) portion de l'image via un bus série optique du véhicule (10) au processeur d'image (16).

23. Appareil (12) selon une des revendications précédentes, **caractérisé en ce que** le générateur d'image (14a) est une caméra de vision arrière pour fournir une vision arrière du véhicule (10) .

24. Procédé pour le traitement d'une image des abords d'un véhicule (10) comprenant les étapes suivantes :
- la génération (502), par une caméra, d'une image ayant au moins une première (200) et une deuxième (202) portion chacune avec un réseau contigu de pixels, les première (200) et deuxième (202) portions étant différentes l'une de l'autre et la première (200) portion de l'image étant fournie plus tôt que la deuxième (202) portion de l'image ;
- transférer la première portion de l'image à un processeur d'image tout en générant la deuxième portion ; et
- le traitement (504), par le processeur d'image, des première (200) et deuxième (202) portions de l'image de manière à traiter l'image, dans lequel le processeur d'image est configuré en outre pour traiter ladite première (200) portion de ladite image alors que ladite deuxième (202) portion de ladite image n'est pas encore disponible pour le processeur d'image.
